# EUROPEAN PATENT APPLICATION

(11) **EP 4 425 910 A1**
(43) Date of publication of application: **04.09.2024**
(21) Application number: 22924361.3
(22) Date of filing: 30.11.2022
(51) Int. Cl.: H04N 5/64, H04N 21/485, F16M 11/18

(54) **DISPLAY DEVICE AND STAND MODULE**

(30) Priority: 28.01.2022 KR 20220013377
(71) Applicant: Samsung Electronics Co., Ltd., Suwon-si, Gyeonggi-do 16677 (KR)
(72) Inventor: DO, Yonggu, Suwon-si Gyeonggi-do 16677 (KR); CHO, Chulyong, Suwon-si Gyeonggi-do 16677 (KR); LIM, Jihae, Suwon-si Gyeonggi-do 16677 (KR)
(74) Representative: Gulde & Partner
(86) International application number: PCT/KR2022/019143
(87) International publication number: WO 2023/146108

(57) **Abstract**

The display module comprises: a display module including a first surface on which a display is arranged, a second surface opposite to the first surface, and slots; and a stand module, which supports the display module and includes a plurality of recognition units, wherein the recognition unit of the stand module corresponds to a communication unit, included in the slots of the display module, so as to adjust the output of the display.

## Description

### Technical Field

The various embodiments below relate to a display device and a stand module.

### Background Art

With the development of various types of display devices (e.g., mobile phones, tablets, and TVs), stand devices for display devices are being developed. Accordingly, demand for stand devices for display devices having various functions (e.g., functions to rotate and slide display devices) is increasing.

### Disclosure of the Invention

### Technical Solutions

Various embodiments provide a display device and stand module that allows watching in various stand modes based on the environment that a user is in and the desired content type.

Various embodiments provide a display device and stand module that automatically changes a content mode by controlling an electrical signal included in a connector of a stand module and a display module in changing a stand mode of the display module.

According to various embodiments, a display device may include a display module including a first surface on which a display is arranged, a second surface opposite to the first surface, and slots, and a stand module supporting the display module and including a plurality of recognition units, wherein the recognition units of the stand module may correspond to communication units included in the slots of the display module and adjust the output of the display.

According to various embodiments, a stand module for standing a display module may include a ground base supporting the stand module, a first stand unit arranged on the ground base, and a second stand unit arranged on the ground base and in contact with one edge of the first stand unit, wherein the stand module may control a display mode output from the display module.

According to various embodiment, in a stand module for standing a display module, the display module may include a plurality of slots including communication units, and the stand module may include a fastening member including recognition units corresponding to the communication units, wherein the fastening member may control the output of a display of the display module by transmitting and receiving electrical signals through the communication units of the display module, and the display may output one of a landscape mode, a portrait mode, or a floating mode according to the type of the slot coupled to the fastening member.

### Effects

According to various embodiments, a display device and stand module according to an embodiment may allow watching in various stand modes based on the environment that a user is in and the desired content type.

According to various embodiments, a display device and stand module according to an embodiment may automatically change a content mode by controlling an electrical signal included in a connector of a stand module and a display module in changing a stand mode of the display module.

The effects of the display device and stand module according to an embodiment are not limited to the above-mentioned effects, and other unmentioned effects can be clearly understood from the following description by one of ordinary skill in the art.

### Brief Description of Drawings

FIG. 1 is a block diagram of an electronic device in a network environment according to various embodiments.
FIG. 2 is a block diagram of a display module according to various embodiments.
FIG. 3A is a front perspective view of a display device according to an embodiment.
FIG. 3B is a rear perspective view of a display device according to an embodiment.
FIG. 3C is a rear perspective view of a display module according to an embodiment.
FIG. 3D is an enlarged view of an area A of FIG. 3C.
FIG. 3E is a front perspective view of a stand module according to an embodiment.
FIG. 3F is an enlarged view of an area B of FIG. 3D.
FIG. 3G is a cross-sectional view taken along a side surface of a display module according to an embodiment.
FIG. 3H is a cross-sectional view taken along a side surface of a display device in which a display module and a stand module are coupled according to an embodiment.
FIG. 4A is a front perspective view of a stand module according to an embodiment.
FIG. 4B is a rear perspective view of a stand module according to an embodiment.
FIG. 4C is a cross-sectional view taken along a side surface of a stand module according to an embodiment.
FIG. 4D is a rear perspective view of a display device in which a first fastening member of a stand module is mounted on a center slot of a display module according to an embodiment.
FIG. 4E is a rear perspective view of a display device in which a second fastening member of a stand module is mounted on a first side slot of a display module according to an embodiment.
FIG. 4F is a rear perspective view of a display device in which a second fastening member of a stand module is mounted on a second side slot of a display module according to an embodiment.
FIG. 4G is a rear perspective view of a display device in which a display module and an assist device are mounted on a first fastening member and a second fastening member of a stand module according to an embodiment.
FIG. 5 is an enlarged perspective view of a ground base of a stand module according to an embodiment.

### Best Mode for Carrying Out the Invention

Hereinafter, embodiments will be described in detail with reference to the accompanying drawings. However, various alterations and modifications may be made to the embodiments. Here, the embodiments are not meant to be limited by the descriptions of the present disclosure. The embodiments should be understood to include all changes, equivalents, and replacements within the idea and the technical scope of the disclosure.

The terminology used herein is for the purpose of describing particular embodiments only and is not intended to be limiting. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

Hereinafter, embodiments of the disclosure will be described in detail with reference to the accompanying drawings.

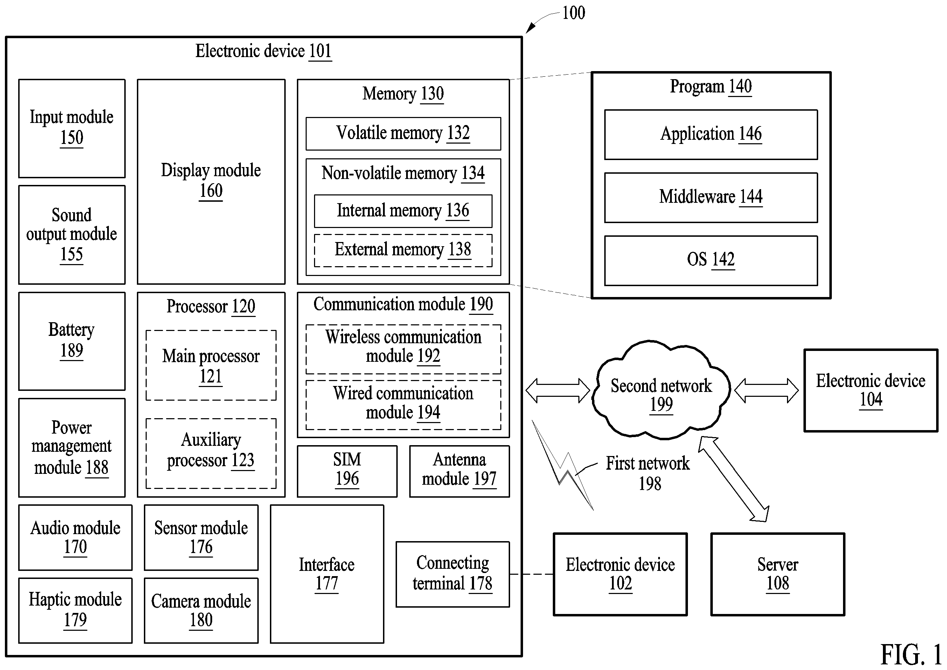

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added in the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a portion of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state, or together with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An artificial intelligence model may be generated by machine learning. Such learning may be performed, e.g., by the electronic device 101 where the artificial intelligence is performed, or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network, or a combination of two or more thereof, but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing a record. The receiver may be used to receive an incoming call. According to an embodiment, the receiver may be implemented separately from the speaker or as a portion of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to sense a touch, or a pressure sensor adapted to measure an intensity of a force incurred by the touch.

The audio module 170 may convert a sound into an electrical signal or vice versa. According to an embodiment, the audio module 170 may obtain the sound via the input module 150 or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a portion of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that operate independently of the processor 120 (e.g., an application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may be transmitted or received between the communication module 190 and the external electronic device via the selected at least one antenna. According to an embodiment, another component (e.g., a radio frequency integrated circuit (RFIC)) other than the radiating element may be additionally formed as a portion of the antenna module 197.

According to various embodiments, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of a same type as, or a different type from, the electronic device 101. According to an embodiment, all or some of operations to be executed by the electronic device 101 may be executed at one or more of external electronic devices (e.g., the external electronic devices 102 and 104, or the server 108). For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-things (IoT) device. The server 108 may be an intelligent server using machine learning and/or a neural network. according to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to embodiments may be one of various types of electronic devices. The electronic device may include, for example, a portable communication device (e.g., a smart phone), a computer device, a portable multimedia device, a portable medical device, a camera, a wearable device, or a home appliance device. According to an embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms such as "1^{st}," and "2^{nd}," or "first" and "second" may be used to simply distinguish a corresponding component from another, and do not limit the components in other aspect (e.g., importance or order). It is to be understood that if a component (e.g., a first component) is referred to, with or without the term "operatively" or "communicatively," as "coupled with," "coupled to," "connected with," or "connected to" another component (e.g., a second component), the component may be coupled with the other component directly (e.g., wiredly), wirelessly, or via a third component.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., an internal memory 136 or an external memory 138) that is readable by a machine (e.g., the electronic device 101) For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, according to embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

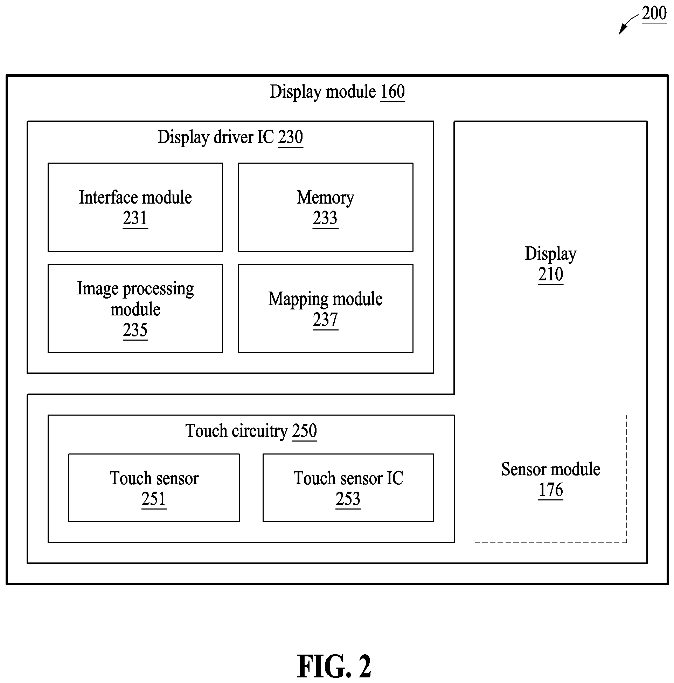

FIG. 2 is a block diagram 200 of the display module 160 according to various embodiments. Referring to FIG. 2, the display module 160 may include a display 210 and a display driver integrated circuit (DDI) 230 to control the display 210. The DDI 230 may include an interface module 231, memory 233 (e.g., buffer memory), an image processing module 235, or a mapping module 237. The DDI 230 may receive image information that contains image data or an image control signal corresponding to a command to control the image data from another component of the electronic device 101 via the interface module 231. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 230 may communicate with touch circuitry 250 or the sensor module 176 via the interface module 231. The DDI 230 may also store at least part of the received image information in the memory 233, for example, on a frame-by-frame basis. The image processing module 235 may perform pre-processing or post-processing (e.g., adjustment of resolution, brightness, or size) with respect to at least part of the image data, for example, based at least in part on characteristics of the image data or characteristics of the display 210. The mapping module 237 may generate a voltage value or a current value corresponding to the image data pre-processed or post-processed by the image processing module 235. According to an embodiment, the generating of the voltage value or current value may be performed, for example, based at least in part on attributes of the pixels (e.g., an array, such as an RGB stripe or a pentile structure, of the pixels, or the size of each subpixel) of the display 210. At least some pixels of the display 210 may be driven, for example, based at least in part on the voltage value or the current value such that visual information (e.g., a text, an image, or an icon) corresponding to the image data may be displayed via the display 210.

According to an embodiment, the display module 160 may further include the touch circuitry 250. The touch circuitry 250 may include a touch sensor 251 and a touch sensor IC 253 to control the touch sensor 251. The touch sensor IC 253 may control the touch sensor 251, for example, to sense a touch input or a hovering input with respect to a predetermined position on the display 210. For example, the touch sensor IC 253 may sense the touch input or the hovering input by measuring a change in a signal (e.g., a voltage, a quantity of light, a resistance, or a quantity of electric charges) corresponding to the predetermined position on the display 210. The touch sensor IC 253 may provide information (e.g., the position, area, pressure, or time) about the sensed touch input or hovering input to the processor 120. According to an embodiment, at least part (e.g., the touch sensor IC 253) of the touch circuitry 250 may be included as part of the display 210 or the DDI 230, or as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in a portion (e.g., the display 210 or the DDI 230) of the display module 160 or in a portion of the touch circuitry 250. For example, when the sensor module 176 embedded in the display module 160 includes a biometric sensor (e.g., a fingerprint sensor), the biometric sensor may obtain biometric information (e.g., a fingerprint image) associated with a touch input through a partial area of the display 210. As another example, when the sensor module 176 embedded in the display module 160 includes a pressure sensor, the pressure sensor may obtain pressure information associated with a touch input through a partial or whole area of the display 210. According to an embodiment, the touch sensor 251 or the sensor module 176 may be disposed between pixels in a pixel layer of the display 210, or over or under the pixel layer.

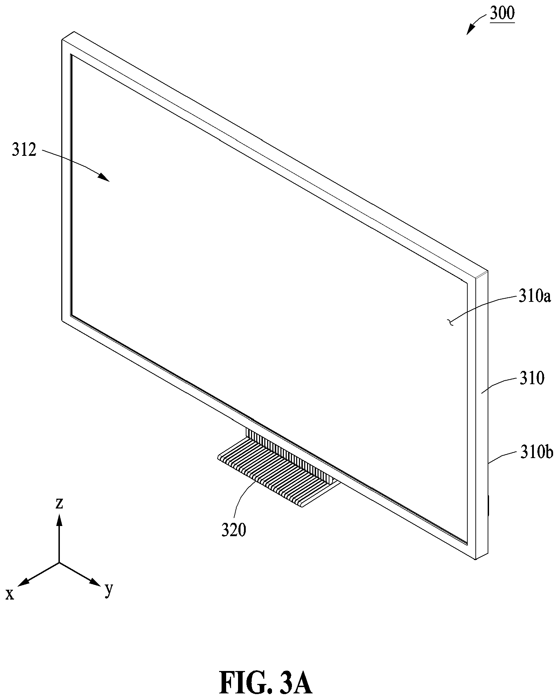

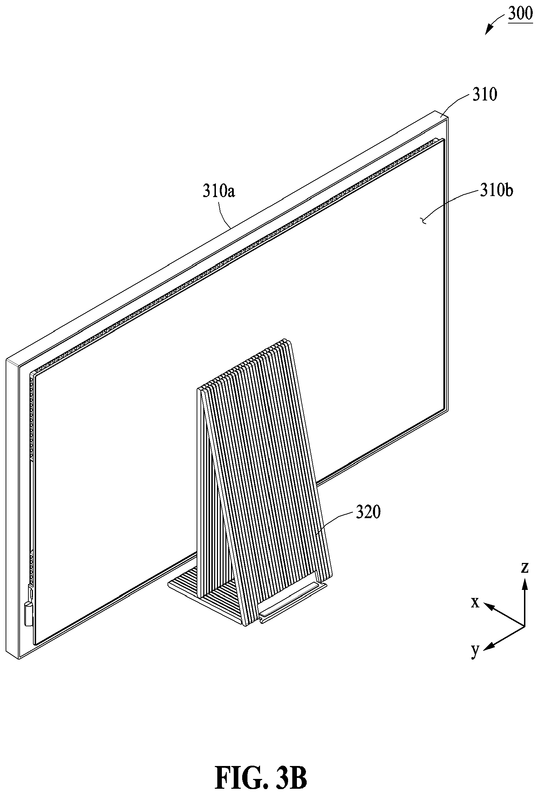

FIGS. 3A and 3B are perspective views of a display device 300 (e.g., the electronic device 101 of FIG. 1) according to an embodiment.

Referring to FIGS. 3A and 3B, the display device 300 may include a display module 310. In an embodiment, the display module 310 (e.g., the display module 160 of FIG. 2) may include a first surface 310a on which a display 312 is arranged and a second surface 310b opposite to the first surface 3 10a. In an embodiment, the display module 310 may include one or more slots 314. The slots 314 according to an embodiment may be arranged on the second surface 310b of the display module 310 or on an outer edge connecting the first surface 310a and the second surface 310b.

Continuously referring to FIGS. 3A and 3B, the display device 300 may include a stand module 320. In an embodiment, the stand module 320 may be coupled to the display module 310, preferably to the slots 314 of the display module 310 to stably support the display module 310.

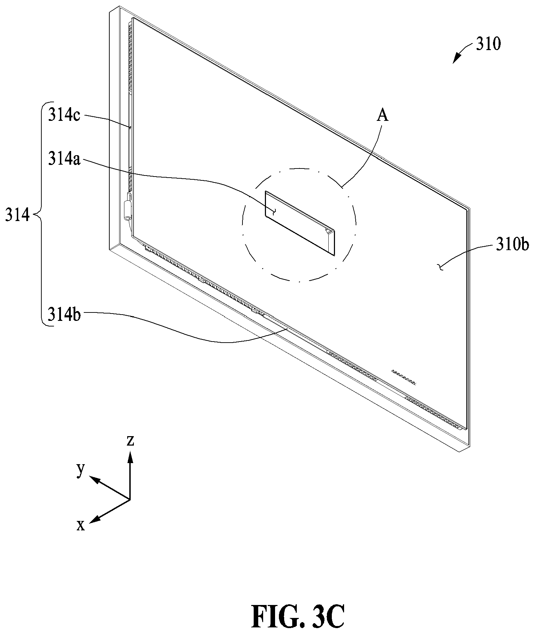

FIG. 3C is a rear perspective view of the display module 310 according to an embodiment.

Referring to FIG. 3C, the display module 310 according to an embodiment may include the slots 314. In an embodiment, the slots 314 may be arranged on the second surface 310b of the display module 310 or on an outer edge connecting the first surface 310a and the second surface 310b.

Continuously referring to FIG. 3C, the slots 314 according to an embodiment may include a center slot 314a, a first side slot 314b, and a second side slot 314c. In an embodiment, the center slot 314a may be arranged on the second surface 310b of the display module 310, and may be formed to be concave in the direction from the second surface 310b to the first surface 310a of the display module 310. In an embodiment, the first side slot 314b may be arranged on an outer edge of the second surface 310b of the display module 310, and may be formed to be concave in the direction from the outer edge of the display module 310 to the center of the display module 310. In an embodiment, the second side slot 314c may be arranged on an outer edge of the second surface 310b perpendicular to the edge where the first side slot 314b is arranged, and may be formed to be concave in the direction from the outer edge of the display module 310 to the center of the display module 310.

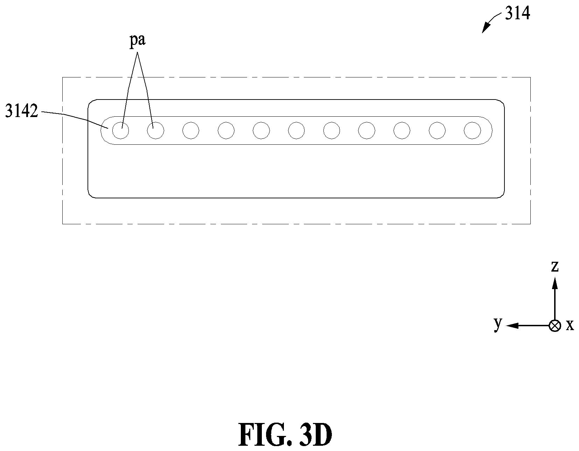

FIG. 3D is an enlarged view of an area A of the display module 310 of FIG. 3C.

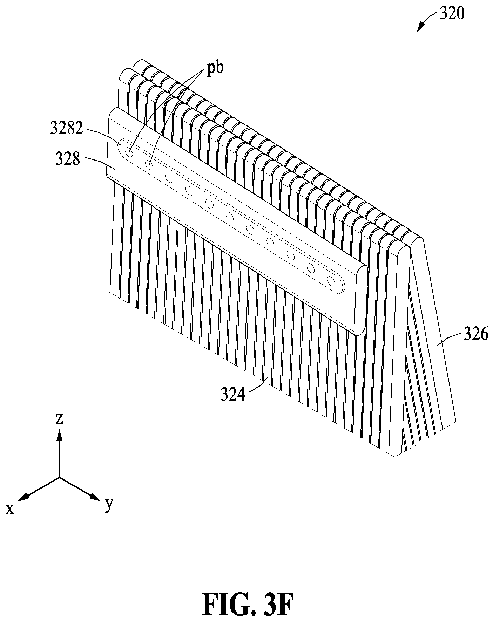

In an embodiment, the slots 314 of the display module 310 may include respective communication units 3142 (e.g., the communication module 190 of FIG. 1). In an embodiment, the communication units 3142 may correspond to a recognition unit (e.g., a recognition unit 3282 of FIG. 3F) of the stand module 320 and change the output of the display 312 of the display module 310. Continuously referring to FIG. 3D, the communication units 3142 included in the slots 314 of the display module 310 may include at least one or more communication pins (pa). In an embodiment, the communication pins (pa) may be arranged at unique positions on the communication units 3142. For example, a communication pin (pa) of a communication unit 3142a included in the center slot 314a may be arranged at a first position, a communication pin (pa) of a communication unit 3142b included in the first side slot 314b may be arranged at a second position different from the first position, and a communication unit 3142c included in the second side slot 314c may be arranged at a third position different from the first position and the second position.

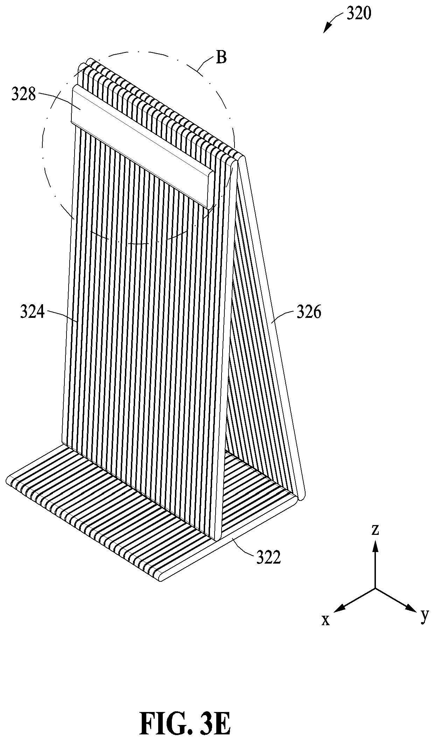

FIG. 3E is a front perspective view of the stand module 320 according to an embodiment.

Referring to FIG. 3E, the stand module 320 according to an embodiment may include a ground base 322 supporting the stand module 320, a first stand unit 324 arranged on the ground base 322, a second stand unit 326 arranged on the ground base 322 and in contact with one edge of the first stand unit 324, and a fastening member 328 arranged on the first stand unit 324 and/or the second stand unit 326.

In an embodiment, the ground base 322, the first stand unit 324, and the second stand unit 326 may be coupled to each other by a coupling method such as interference fit coupling, coupling by electromagnetic attraction, and/or slide coupling. By means of the coupling/decoupling structure of the ground base 322, the first stand unit 324, and the second stand unit 326, the display device 300 may be easy to store when not in use, and the display device 300 may also be easy to carry due to its reduced volume when stored, compared to a structure that cannot be decoupled.

FIG. 3F is an enlarged view of an area B of the stand module 320 of FIG. 3E.

Referring to FIG. 3F, the stand module 320 according to an embodiment may include the fastening member 328 on at least one of the first stand unit 324 and/or the second stand unit 326. In an embodiment, the fastening member 328 may include the recognition unit 3282. The recognition unit 3282 according to an embodiment may correspond to the communication units 3142 arranged on the slots 314 of the display module 310 and adjust the output of the display 312. Continuously referring to FIG. 3F, the recognition unit 3282 may include one or more recognition pins (pb). In an embodiment, the recognition pins (pb) may include a landscape recognition pin, a portrait recognition pin, and an event recognition pin, but are not limited thereto, and may include various functional recognition pins configured to control the display 312 to the scope that can be easily conceived by one of ordinary skill in the art. For example, the landscape recognition pin may store an output mode that causes the display 312 to be output in the horizontal direction, and when corresponding to and/or in contact with the communication pins (pa) of the communication units 3142 included in the slots 314 of the display module 310, cause the display 312 to be output in the horizontal direction. For example, the portrait recognition pin may store an output mode that causes the display 312 to be output in the vertical direction, and when corresponding to and/or in contact with the communication pins (pa) of the communication units 3142 included in the slots 314 of the display module 310, cause the display 312 to be output in the vertical direction. For example, the event recognition pin may store an output mode of the display 312 set by a user, and when corresponding to and/or in contact with the communication pins (pa) of the communication units 3142 included in the slots 314 of the display module 310, cause the display 312 to be output in the output mode set by the user.

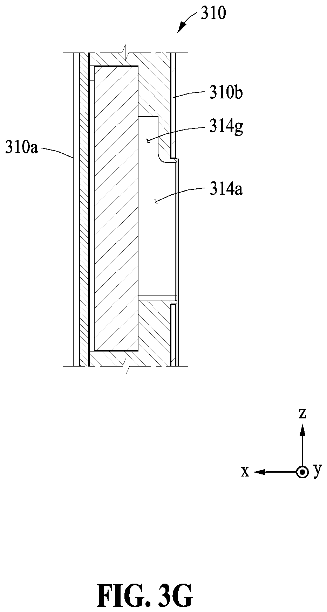

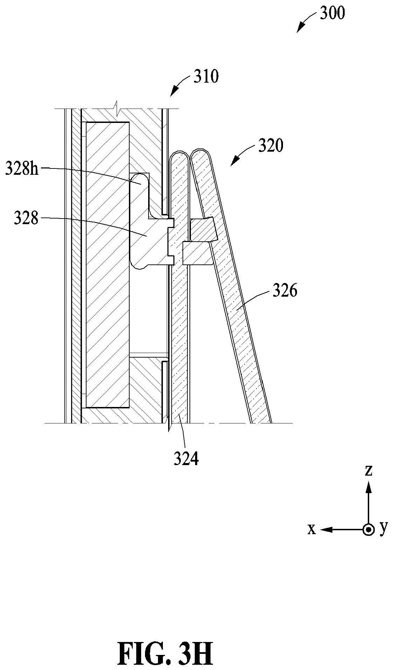

FIGS. 3G and 3H are cross-sectional views taken along a side surface when the center slot 314a of the display module 310 and the stand module 320 of the display module 310 are combined according to an embodiment.

Referring to FIG. 3G, the center slot 314a may be a space formed to be concave in the direction from the second surface 310b to the first surface 310a of the display module 310, and may include a groove 314g formed in a direction (e.g., the z direction) perpendicular to the direction from the second surface 310b to the first surface 310a.

Referring to FIG. 3H, the fastening member 328 may be formed to protrude outward from one surface of the first stand unit 324 and/or the second stand unit 326 of the stand module 320, and may include a hook 328h protruding in a direction (e.g., the z direction) perpendicular to the direction in which the fastening member 328 protrudes from the first stand unit 324 and/or the second stand unit 326. In an embodiment, the hook 328h of the fastening member 328 may be coupled to the groove 314g of the slot 314 of the display module 310. The hook 328h of the fastening member 328 and the slot 314 of the display module 310 may be coupled by a coupling method such as, for example, interference fit coupling, coupling by electromagnetic attraction, and/or slide coupling.

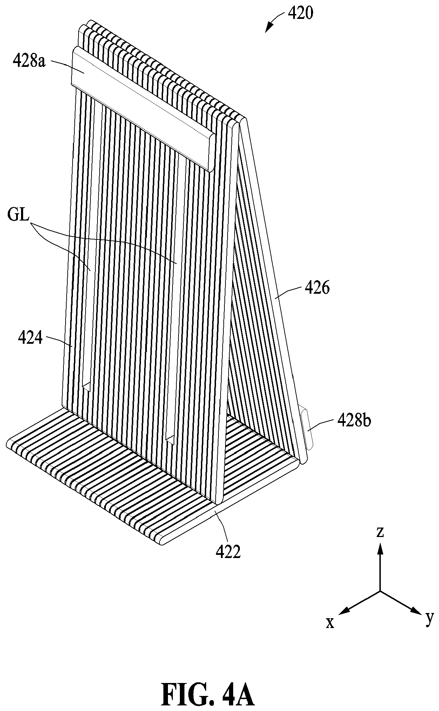

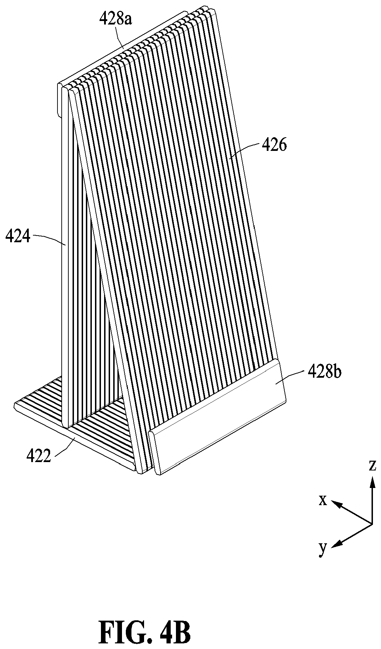

FIGS. 4A and 4B are perspective views of a stand module 420 (e.g., the stand module 320 of FIGS. 3A and/or 3B) according to an embodiment.

In an embodiment, the stand module 420 may include a ground base 422 (e.g., the ground base 322 of FIG. 3E) supporting the stand module 420, a first stand unit 424 (e.g., the first stand unit 324 of FIG. 3E) arranged on the ground base 422, a second stand unit 426 (e.g., the second stand unit 326 of FIG. 3E) arranged on the ground base 422 and in contact with one edge of the first stand unit 424, and a fastening member 428 (e.g., the fastening member 328 of FIG. 3E) arranged on the first stand unit 424 and/or the second stand unit 426. The stand module 420 according to an embodiment may further include a guide rail (GL) extending from one side of the first stand unit 424 in contact with the ground base 422 to the opposite side.

In an embodiment, the fastening member 428 may include a first fastening member 428a coupled to the first stand unit 424 and a second fastening member 428b coupled to the second stand unit 426. The first fastening member 428a according to an embodiment may be coupled to the first stand unit 424 and move up and down (e.g., move in the ±z direction) on one surface of the first stand unit 424 among the guide rail (GL). The second fastening member 428b according to an embodiment may be fixed and arranged at the lower end of the second stand unit 426.

In an embodiment, the fastening member 428 arranged in the first stand unit 424 and the second stand unit 426 may be a multi-coupling fastening member. In an embodiment, the first stand unit 424 may include a first fastening groove, and the second stand unit 426 may include a second fastening groove. The first fastening groove and the second fastening groove may have the same structure, and the multi-coupling fastening member 428 according to an embodiment may be selectively coupled to one of the first fastening groove and the second fastening groove. The stand module 420 including the multi-coupling fastening member 428 according to an embodiment may allow the fastening member 428 to be arranged in a desired fastening groove of the stand module 420 as needed by the user, thereby improving the utilization of the display device 400.

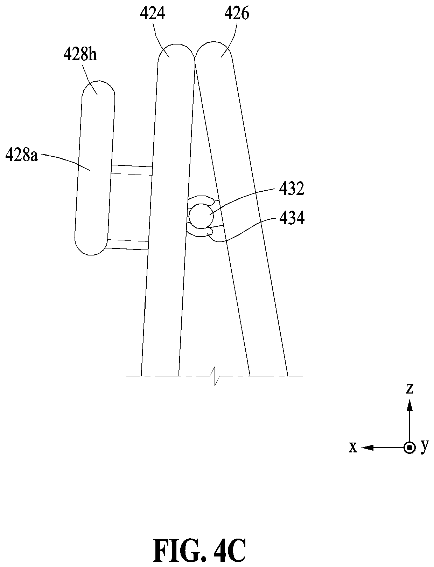

FIG. 4C is a cross-sectional view taken along a side surface of the stand module 420 according to an embodiment.

Referring to FIG. 4C, the stand module 420 according to an embodiment may further include a hinge unit 430. The hinge unit 430 according to an embodiment may couple the first stand unit 424 and the second stand unit 426 to each other, so that the angle of the standing module 420 may be adjusted. The hinge unit 430 according to an embodiment may include a male hinge unit 432 and a female hinge unit 434. The male hinge unit 432 may include a cylindrical coupling member, and the female hinge unit 434 may include a pair of curved coupling members. As the male hinge unit 432 fits between the curved coupling members of the female hinge unit 434, the angle between the first stand unit 424 and the second stand unit 426 may be adjusted with the male hinge unit 432 as an axis. In an embodiment, the first stand unit 424 may include the female hinge unit 434, and the second stand unit 426 may include the male hinge unit 432. In another embodiment, the first stand unit 424 may include the male hinge unit 432, and the second stand unit 426 may include the female hinge unit 434.

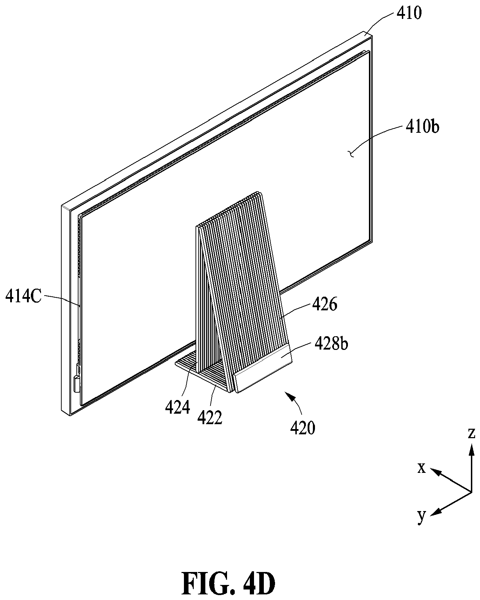

FIGS. 4D to 4F are rear perspective views of the display device 400 (e.g., the display device 300 of FIGS. 3A and 3B) in which a slot (e.g., the slot 314 of FIG. 3C) of the display module 410 and a fastening member of the stand module 420 are coupled according to an embodiment.

FIG. 4D is a rear perspective view of the display device 400 in which the first fastening member 428a of the stand module 420 is mounted on a center slot (e.g., the center slot 314a of FIG. 3C) of the display module 410 according to an embodiment. When the first fastening member 428a of the stand module 420 according to an embodiment is mounted on the center slot (e.g., the center slot 314a of FIG. 3C) of the display module 410, the display module 410 may be arranged to be spaced apart from the bottom surface or the ground base 422 (e.g., floating mode arrangement). Further, as described above, the stand module 420 may further include the guide rail (GL) extending from one side of the first stand unit 424 in contact with the ground base 422 to the opposite side, and thus, the display module 410 may also move up and down as the first fastening member 428a moves up and down. In an embodiment, in the case of the floating mode arrangement, the display 412 of the display module 410 may be output in a floating mode. Outputting the display 412 in the floating mode may indicate a display state the most optimized for use by the user in the floating mode arrangement of the display device 400.

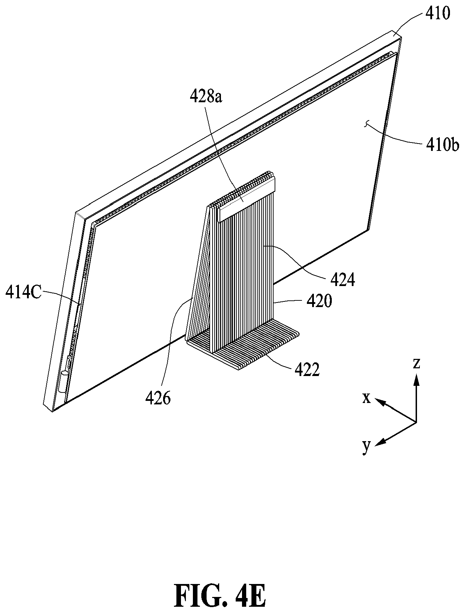

FIG. 4E is a rear perspective view of the display device 400 in which the second fastening member 428b of the stand module 420 is mounted on a first side slot (e.g., the first side slot 314b of FIG. 3C) of the display module 410 according to an embodiment. When the second fastening member 428b of the stand module 420 according to an embodiment is mounted on the first side slot (e.g., the first side slot 314b of FIG. 3C) of the display module 410, the display module 410 may be in contact with the bottom surface or the ground base 422 and arranged in a direction (e.g., the ±*y* direction) in which the longer edge of the display module 410 is parallel to the bottom surface (e.g., landscape mode arrangement). In an embodiment, in the case of the landscape mode arrangement, the display 412 of the display module 410 may be output in a horizontal direction.

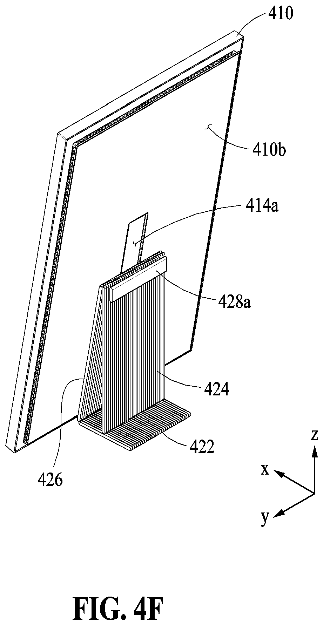

FIG. 4F is a rear perspective view of the display device 400 in which the second fastening member 428b of the stand module 420 is mounted on a second side slot (e.g., the second side slot 314c of FIG. 3C) of the display module 410 according to an embodiment. When the second fastening member 428b of the stand module 420 according to an embodiment is mounted on the second side slot (e.g., the second side slot 314c of FIG. 3C) of the display module 410, the display module 410 may be in contact with the bottom surface or the ground base 422 and arranged in a direction (e.g., the ±z direction) in which the longer edge of the display module 410 is perpendicular to the bottom surface (e.g., portrait mode arrangement). In an embodiment, in the case of the portrait mode arrangement, the display 412 of the display module 410 may be output in a vertical direction.

In an embodiment, since the stand module 420 may include at least one fastening member 428 in each of the first stand unit 424 and the second stand unit 426, each of the first fastening member 428a coupled to the first stand unit 424 and the second fastening member 428b coupled to the second stand unit 426 may be coupled to slots 414 included in a separate display module 410. When a separate display module 410 is coupled to each of the first fastening member 428a and the second fastening member 428b according to an embodiment, a first display module coupled to the first fastening member 428a and a second display module coupled to the second fastening member 428b may output different displays.

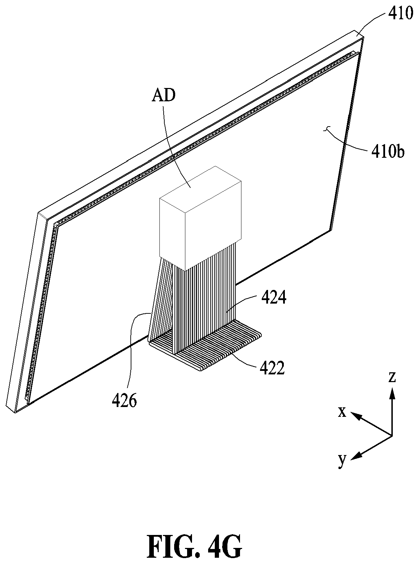

FIG. 4G is a rear perspective view of the display device 400 in which the display module 410 and an assist device (AD) are mounted on the first fastening member 428a and the second fastening member 428b of the stand module 420 according to an embodiment.

Referring to FIG. 4G, one of the first fastening member 428a and the second fastening member 428b of the stand module 420 may be coupled to the display module 410, and the other fastening member not coupled to the display module 410 may be coupled to the assist device (AD). In an embodiment, the assist device (AD) may include various devices that function to help drive the display module 410. For example, the assist device (AD) may be a sound output module (e.g., the sound output module 155 of FIG. 1) for amplifying sound output from the display device 400 according to an embodiment. For example, the assist device (AD) may be a power supply module (e.g. the battery 189 of FIG. 1) for supplying power to the display device 400. For example, the assist device (AD) may be a communication module (e.g., the communication module 190 of FIG. 1) for allowing the display device 400 according to an embodiment to smoothly communicate with other electronic devices (e.g., the electronic device 101 of FIG. 1). The assist device (AD) according to an embodiment may perform various functions to serve as an assistant for the display device 400 that can be easily conceived by one of ordinary skill in the art, in addition to the functions in the above examples.

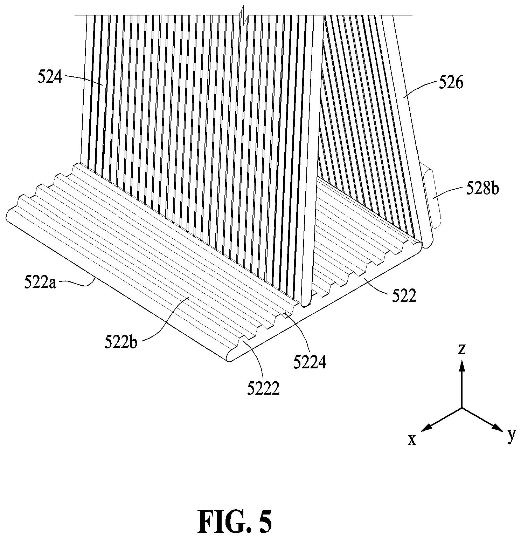

FIG. 5 is an enlarged perspective view of the ground base 422 of a stand module (e.g., the stand module 420 of FIG. 4A) according to an embodiment.

A ground base 522 according to an embodiment may include a first surface 522a in contact with the bottom surface and a second surface 522b opposite to the first surface 522a, and the second surface 522b of the ground base 522 may include one or more projections 5222 and grooves 5224. The projections 5222 according to an embodiment may be arranged between adjacent grooves 5224, and the grooves 5224 according to an embodiment may be arranged between adjacent projections 5222. In an embodiment, the projections 5222 and the grooves 5224 may be formed to extend in a direction parallel to the edge of the first stand unit 524 meeting the ground base 522. Through the structure of the one or more projections 5222 and grooves 5224 continuously formed on the second surface 522b of the ground base 522, the edge of the first stand unit 524 may be engaged with a groove 5224 of the ground base 522. Based on the position of the groove 5224 engaged with the edge of the first stand unit 524 according to an embodiment, the standing angle of the first stand unit 524 and the second stand unit 526 may be adjusted.

According to various embodiments, a display device 300 may include a display module 310 including a first surface 310a on which a display 312 is arranged, a second surface 310b opposite to the first surface 310a, and slots 314, and a stand module 320 supporting the display module 310 and including a plurality of recognition units 3282, wherein the recognition units 3282 of the stand module 320 may correspond to communication units 3142 included in the slots 314 of the display module 310 and adjust the output of the display 312.

In an embodiment, the slots 314 in the display module 310 may include a center slot 314a arranged on the second surface 310b, a first side slot 314b arranged at an outer edge of the second surface 310b, and a second side slot 314c arranged at an outer edge of the second surface 310b perpendicular to the edge where the first side slot 314b is arranged, and the stand module 320 may include a fastening member 328 to be fastened to the slots 314.

In an embodiment, the communication units 3142 may be arranged on the slots 314, and the recognition units 3282 may be arranged on the fastening member 328.

In an embodiment, the communication units 3142 may include at least one or more communication pins (pa), the recognition units 3282 may include a landscape recognition pin (pb), a portrait recognition pin (pb), and an event recognition pin (pb), and the recognition pins (pb) may correspond to different communication pins (pa) of the communication units 3142.

In an embodiment, the landscape recognition pin (pb) may store an output mode that causes the display 312 to be output in a horizontal direction, and when in contact with a communication pin (pa) of the display module 310, cause the display 312 to be output in a landscape mode, and the portrait recognition pin (pb) may store an output mode that causes the display 312 to be output in a vertical direction, and when in contact with a communication pin (pa) of the display module 310, cause the display 312 to be output in a portrait mode.

In an embodiment, the event recognition pin (pb) may store a display output mode set by a user, and when in contact with a communication pin (pa) of the display module 310, cause the display 312 to be output in an output mode set by the user.

In an embodiment, the stand module 320 may include a ground base 322 supporting the stand module 320, a first stand unit 324 arranged on the ground base 322, and a second stand unit 326 arranged on the ground base 322 and in contact with one edge of the first stand unit 324.

In an embodiment, the display device may further include a first fastening member 428a coupled to the first stand unit 424 (e.g., the first stand unit 324 of FIG. 3E), wherein the first fastening member 428a may move up and down on one surface of the first stand unit 424, and a second fastening member 428b fixed to a lower end of the second stand unit 426 (e.g., the second stand unit 326 of FIG. 3E).

In an embodiment, the slots 414 in the display module 410 may include a center slot 414a arranged on the second surface 410b, a first side slot 414b arranged at an outer edge of the second surface 410b, and a second side slot 414c arranged at an outer edge of the second surface 410b perpendicular to the edge where the first side slot 414b is arranged, and the first fastening member 428a may be coupled to the center slot 414a, and the second fastening member 428b may be coupled to the first side slot 414b or the second side slot 414c.

In an embodiment, when the first fastening member 428a is coupled to the center slot 414a, the display module 410 may move up and down, and the display 412 of the display module 410 may be output in a floating mode.

In an embodiment, each of the first fastening member 428a and the second fastening member 428b may be coupled to separate slots 414 included in the display module 410.

In an embodiment, one of the first fastening member 428a and the second fastening member 428b may be coupled to the display module 410, and the fastening member 428b or 428a other than the fastening member 428a or 428b coupled to the display module 410 may be coupled to an assist device (AD) which helps drive the display module 410.

In an embodiment, the assist device (AD) may include a power supply module (e.g., the battery 189 of FIG. 1) that supplies power to the display module 410.

According to various embodiments, a stand module 420 for standing a display module 410 may include a ground base 422 supporting the stand module 420, a first stand unit 424 arranged on the ground base 422, and a second stand unit 426 arranged on the ground base 422 and in contact with one edge of the first stand unit 424, wherein the stand module 420 may control a display mode output from the display module 410.

In an embodiment, the stand module may further include a first fastening member 428a coupled to the first stand unit 424, wherein the first fastening member 428a may move up and down on one surface of the first stand unit 424, and a second fastening member 428b fixed to a lower end of the second stand unit 426.

In an embodiment, the stand module may further include a multi-coupling fastening unit 428, wherein the first stand unit 424 may include a first fastening groove, the second stand unit 426 may include a second fastening groove, and the multi-coupling fastening member 428 may be fastened to one of the first fastening groove or the second fastening groove.

In an embodiment, the first stand unit 424 and the second stand unit 426 may be hinge-coupled, and a standing angle of the stand module 420 may be adjusted by the hinge coupling of the first stand unit 424 and the second stand unit 426.

In an embodiment, the ground base 522 may include a first surface 522a in contact with the bottom surface and a second surface 522b opposite to the first surface 522a, and the second surface 522b of the ground base 522 may include one or more projections 5222 and grooves 5224 extending in parallel with the edge of the first stand unit 524 meeting the ground base 522.

In an embodiment, at least one of the first stand unit 424 and the second stand unit 426 may further include a power supply module (e.g., the battery 189 of FIG. 1) that supplies power to the display module 410.

According to various embodiment, in a stand module 320 for standing a display module 310, the display module 310 may include a plurality of slots 314 including communication units 3142, and the stand module 320 may include a fastening member 328 including recognition units 3282 corresponding to the communication units 3142, wherein the fastening member 328 may control the output of a display 312 of the display module 310 by transmitting and receiving electrical signals through the communication units 3142 of the display module 310, and the display 312 may output one of a landscape mode, a portrait mode, or a floating mode according to the type of the slot 314 coupled to the fastening member 328.

A number of embodiments have been described above. Nevertheless, it should be understood that various modifications and variations may be made to these embodiments. For example, suitable results may be achieved if the described techniques are performed in a different order, and/or if components in a described system, architecture, device, or circuit are combined in a different manner, and/or replaced or supplemented by other components or their equivalents.

Therefore, other implementations, other embodiments, and/or equivalents of the claims are within the scope of the following claims.

## Claims

1. A device comprising:
a display module comprising a first surface on which a display is arranged, a second surface opposite to the first surface, and slots; and
a stand module supporting the display module, and comprising a plurality of recognition units,
wherein the recognition units of the stand module correspond to communication units in the display module and adjust the output of the display.

2. The device of claim 1, wherein
the slots in the display module comprise a center slot arranged on the second surface; a first side slot arranged at an outer edge of the second surface; and a second side slot arranged at an outer edge of the second surface perpendicular to the edge where the first side slot is arranged, and
the stand module comprises a fastening member to be fastened to the slots.

3. The device of claim 2, wherein
the communication units are arranged on the slots, and
the recognition units are arranged on the fastening member.

4. The device of claim 3, wherein
the communication units comprise at least one or more communication pins, the recognition units comprise a landscape recognition pin, a portrait recognition pin, and an event recognition pin, and
the recognition pins correspond to different communication pins of the communication units.

5. The device of claim 4, wherein
the landscape recognition pin stores an output mode that causes the display to be output in a horizontal direction, and when in contact with a communication pin of the display module, causes the display to be output in a landscape mode, and
the portrait recognition pin stores an output mode that causes the display to be output in a vertical direction, and when in contact with a communication pin of the display module, causes the display to be output in a portrait mode.

6. The device of claim 4, wherein
the event recognition pin stores a display output mode set by a user, and when in contact with a communication pin of the display module, causes the display to be output in an output mode set by the user.

7. The device of claim 1, wherein
the stand module comprises:
a ground base supporting the stand module;
a first stand unit arranged on the ground base; and
a second stand unit arranged on the ground base and in contact with one edge of the first stand unit.

8. The device of claim 7, further comprising:
a first fastening member coupled to the first stand unit, wherein the first fastening member is movable up and down on one surface of the first stand unit, and
a second fastening member fixed to a lower end of the second stand unit.

9. The device of claim 8, wherein
the slots in the display module comprise a center slot arranged on the second surface; a first side slot arranged at an outer edge of the second surface; and a second side slot arranged at an outer edge of the second surface perpendicular to the edge where the first side slot is arranged, and
the first fastening member is coupled to the center slot, and the second fastening member is coupled to the first side slot or the second side slot.

10. The device of claim 9, wherein
when the first fastening member is coupled to the center slot, the display module is movable up and down, and
the display of the display module is output in a floating mode.

11. The device of claim 8, wherein
each of the first fastening member and the second fastening member is coupled to separate slots included in the display module.

12. The device of claim 8, wherein
one of the first fastening member and the second fastening member is coupled to the display module, and
the fastening member other than the fastening member coupled to the display module is coupled to an assist device which helps drive the display module.

13. The device of claim 12, wherein
the assist device comprises a power supply module that supplies power to the display module.

14. The device of claim 7, further comprising:
a multi-coupling fastening member,
wherein the first stand unit comprises a first fastening groove, and the second stand unit comprises a second fastening groove, and
the multi-coupling fastening member is fastened to one of the first fastening groove or the second fastening groove.

15. The device of claim 7, wherein
the first stand unit and the second stand unit are hinge-coupled, and
a standing angle of the stand module is adjusted by the hinge coupling of the first stand unit and the second stand unit.
